# EUROPEAN PATENT SPECIFICATION

(11) **EP 3 672 399 B1**
(45) Date of publication and mention of the grant of the patent: **16.02.2022**
(21) Application number: 18801073.0
(22) Date of filing: 22.08.2018
(51) Int. Cl.: A01J 27/00, A01J 27/04

(54) **A FOOD PRODUCT OUTER LAYER REMOVAL SYSTEM AND METHOD**
SYSTEM UND VERFAHREN ZUR ENTFERNUNG VON ÄUSSEREN SCHICHTEN EINES LEBENSMITTELS
SYSTÈME ET PROCÉDÉ D'ENLÈVEMENT DE COUCHE EXTÉRIEURE DE PRODUIT ALIMENTAIRE

(30) Priority: 23.08.2017 NL 2019440
(43) Date of publication of application: 01.07.2020
(73) Proprietor: Vergeer Holding B.V., 2811 PT Reeuwijk (NL); Tecuma B.V., 2841 MC Moordrecht (NL)
(72) Inventor: DE WALL, Reinier, 2811 VL Reeuwijk (NL); VAN DER HOEK, Marinus Jacobus, 3137 PA Vlaardingen (NL)
(74) Representative: van der Velden, Marc
(86) International application number: PCT/NL2018/050550
(87) International publication number: WO 2019/039940

(56) References cited:
- DE-A1- 4 128 025
- DE-A1-102013 205 728
- NL-C- 2 007 374

## Description

### BACKGROUND OF THE INVENTION

The invention relates to a system to remove at least a portion of an outer layer of a food product, wherein the food product is a cheese. The invention also relates to a method to remove at least a portion of an outer layer of a food product.

The production of cheese goes back many hundreds to thousand of years. While in the early days everything was done by hand, the production of cheese is now highly automated in order to produce cheese with less variations in for instance texture and taste.

Once a cheese is finished it is usually prepared and packaged for consumption. Common forms in which cheeses are sold include sliced cheese, grated cheese, and cubes as cheese snacks. All of these forms have in common that a lot of processing is required, including amongst others the removal of the outer layer of the cheese, i.e. the rind, of the cheese, especially when the cheeses have been coated during production.

Where the production of cheese has been highly automated, the same holds for the preparation and packaging process after production, including rind removal. An example of a prior art device to remove the rind of a cheese is disclosed in Dutch patent publication NL2007374. DE 41 28 025 A1 discloses also a system and a method to remove the rind of a cheese according to the preamble of independent claims 1 and 11.

In NL2007374, the outer contour of the cheese is scanned using rollers in a first processing station and the information thus obtained is used to remove a predetermined thickness of rind from the cheese in a second processing station.

Cheeses are not the only food products in which the outer layer needs to be removed.

The same holds (but not according to the invention) for many fruits and vegetables, e.g. melons and cucumbers, but also for meat products.

### BRIEF SUMMARY OF THE INVENTION

It is an object of the invention to provide an improved system and method to remove at least a portion of an outer layer of a food product.

According to a first aspect of the invention, there is provided a system to remove at least a portion of an outer layer of a food product according to claim 1.

The invention is based on the insight of the inventors that food products, even when produced in a highly automated and controlled environment, still show variations, may have different properties, and/or may suffer from diseases, bacteria or molds, so that to remove the outer layer of a food product more information than shape or contour is required in order to guarantee a high degree of quality in the automated processing chain and/or to improve efficiency.

In an embodiment but not according to the invention, the at least one other parameter of the food product comprises the kind of food product when the system is used for different kinds of food products. For instance, the same system may be suitable to process different kinds of fruits, e.g. melons, oranges, and/or lemons or the like. The system is then able to distinguish one kind of food product, in this case fruit, from another kind.

It is explicitly noted here that the use of the system is not limited to a kind of food product such as fruit per se. It is also possible that the system is able (but not according to the invention) to process e.g. fruits and vegetables.

Additionally or alternatively, the at least one other parameter of the food product comprises the type, variety, species or family member in a kind of food product. According to the invention, the system is able to process cheeses, and the measurement system may be used to distinguish between different types of cheeses. Or when the system is able to process (but not according to the invention) melons, the measurement system may be used to distinguish different varieties of melons. The same holds for other kind of food products.

Distinguishing kinds, types, varieties, species or family members may be carried out by measuring properties of the food product itself, but the measurement system may also be simply adapted to (but not according to the invention) read a code on the food product or to receive a code from the food product. This includes reading a bar code or two-dimensional code, e.g. a QR code, from the food product, but also receiving a code from a tag such as an RFID tag.

In an embodiment, the at least one other parameter of the food product comprises a thickness of the outer layer or rind of the food product. In this context, the rind of a food product is the outer layer of the food product generally having different properties then the inner side of the food product, which is usually the reason why at least a portion of the outer layer needs to be removed. Although the terms outer layer or rind will be used throughout this specification independent of the type of food product, it may be common Z but not according to the invention to use other terms in combination with certain type of food products. Examples of such terms are peel, skin, hull, shell, zest and outer covering. It will be apparent to the skilled person that the term outer layer or rind may be replaced by any one of these terms where appropriate, but not according to the invention.

The transition from rind to inner side of the food product may be clear, e.g. in case of fruits where there is a substantially sudden change in properties, or when the food product comprises an outer layer that can relatively easily be separated from the layers beneath it, but properties may also gradually change from the outside to the inside, as may for instance be the case with some type of cheeses. In case of the latter, it may be necessary to define the rind in more detail to be able to determine a thickness of the rind. This may be done in a calibration method, in which the rind is analyzed in more detail to be able to determine a threshold allowing to distinguish the rind from the inner side of the food product. When measuring a food product, the system is then configured to search for the threshold in the measurement data to be able to determine a thickness of the rind. It will be apparent for the skilled person that determining the threshold to be used may be a matter of choice, where the choice may depend on other parameters, including experience and (marketing) research, e.g. in which the average consumer is asked about their opinion of the quality of the food product after removal of at least a portion of the outer layer of the food product.

In an embodiment, the system is configured to determine a single value for the thickness of the rind as a measure for the average thickness of the rind across the food product. This is especially suitable when the thickness of the rind of a food product is substantially constant across the food product, but varies between individual food products. By taking into the account the thickness of the rind when removing the outer layer of the food product the yield can be increased.

When the local thickness of the rind varies too much across the food product, a single value for the thickness of the rind will not be sufficiently representative for the thickness of the rind. Hence, when the processing device is able to vary the thickness of the removed outer layer across the product, the system may be configured to determine a map of local thicknesses of the rind which has the advantage that the processing device can be controlled based on the local thickness of the rind thereby substantially only removing the rind and less of the product below the rind, which increases the yield of the food product.

In an embodiment, the at least one other parameter of the food product comprises the presence, and possibly properties, of defects in the food products. In this context defects are undesired deviations from a standard or average healthy food product, including cavities or pockets, portions having undesired properties such as density, composition or color, or the presence of bacteria or mold. This allows to remove the defects during the subsequent processing by the processing device or to reject a food product when the defects are too extensive and subsequently remove the food product from the system.

In an embodiment, the at least one other parameter of the food product comprises at least one material property of the food product allowing to adjust a parameter of the processing device other then thickness of the outer layer to be removed, for instance the speed of removal, i.e. the relative velocity between tool and food product, or the angle of the tool with respect to the food product, etc. The at least one other parameter of the food product may be the density of the material, the strength of the material, the elasticity of the material, the viscosity of the material, etc.

It is to be noted that the at least one other parameter does not necessarily need to be measured directly, but may also be determined indirectly through the measuring of other parameters or variables.

In an embodiment, at least the portion of the measurement system to measure the at least one other parameter is arranged downstream of the processing device. This embodiment allows to remove at least a portion of the outer layer of a food product using a prior art method, e.g. as disclosed in NL2007374, and to determine the result by measuring the at least one other parameter of the food products after removal of at least a portion of the outer layer, which at least one other parameter of the food products allows to determine the result, e.g. by measuring the thickness of the rind or the presence of defects. If the rind is removed correctly, the food product may go to the next device, but when the rind removal is not satisfactory, the food product may be returned to the same processing device or directed to a separate similar other processing device to carry out a further removal step based on the shape or contour of the food product and the at least one other parameter. The outcome of the further removal step can be checked again and steps may be repeated multiple times if necessary and/or desired.

In an embodiment, the measurement system is arranged upstream of the processing device.

In an embodiment, at least a portion of the measurement system and processing device are substantially integrated, meaning that measuring and processing is carried out substantially simultaneously allowing to measure parameters of the food product during processing in order to adjust the processing on the fly, i.e. before being finished.

In an embodiment, the measurement system comprises a first measurement device to measure the shape or outer contour of the food product and a separate second measurement device to measure the at least one other parameter of the food product, wherein for instance the first measurement device is arranged upstream of the processing device and the second measurement device is arranged downstream of the processing device.

However, it may also be possible that the measurement system comprises only a single measurement device to measure the shape or outer contour and the at least one other parameter of the food product, e.g. when using a vision system, for instance including a camera. In other words, the first and second measurement devices may be integrated. In that case, the single measurement device is arranged upstream of the processing device.

According to the invention, the food product is a cheese, preferably a cheese comprising a rind, more preferably a cheese comprising a coated rind.

In an embodiment, the system comprises a conveyor to transport food products along the processing device and the measurement system. The conveyor may for instance be a belt conveyor, in which the food product is transported on an endless belt, a bucket conveyor, in which the food product is transported in a bucket, an electric track vehicle system, in which the food product is transported by an independently driven vehicle, a roller conveyor, in which the food product is transported on rollers, or a flexible conveyor, in which the food product is transported on a plastic multi-flexing chain. Such conveyors are well-known to the skilled person in the art of conveying food products.

In an embodiment, the system comprises a control unit, wherein the control unit is configured to receive the measurement signal from the measurement system and to output the control signal to the processing device.

In an embodiment, the system comprises a control unit configured to carry out the method, wherein the measurement system is configured to provide the information about the at least one parameter of the food product other than shape or outer contour, and wherein the thickness of an outer layer of the food product to be removed is to be provided to the processing system.

In an embodiment, the system comprises a control unit to control the processing device based on information obtained from the measurement system. Preferably, the control unit is or comprises a computer with a computer-readable data carrier having stored thereon a computer program product.

According to a second aspect of the invention, there is also provided a method to remove at least a portion of an outer layer of a food product according to claim 11.

In an embodiment, the method according to the second aspect of the invention is carried out by a system according to the first aspect of the invention.

According to the invention, the food product is a cheese.

In an embodiment, step c) is carried out after carrying out steps a) and b).

In an embodiment, steps a) and b) are carried out using a single measurement device, preferably the shape or outer contour of the food product and the at least one parameter of the food product other than shape or outer contour of the food product are measured simultaneously.

In an embodiment, the method comprises the following step in between steps a) and b): removing at least a portion of the outer layer of the food product based on the measured shape or outer contour of the food product, wherein the at least one parameter of the food product other than shape or outer contour of the food product measured in step b) is carried out to determine a quality of removing step carried out between steps a) and b), and step c) is only carried out in case the determined quality is below a predetermined value or standard to improve the quality.

In an embodiment, measuring at least one parameter of the food product other than shape or outer contour of the food product in step b) is carried out to determine a thickness of the outer layer to be removed, wherein removing at least a portion of the outer layer of the food product in step c) is based on the measured shape or outer contour of the food product and based on the determined thickness.

In an embodiment, after step c) the method comprises the following steps:
d) measuring at least one parameter other than
   shape or outer contour of the food
   product to determine the presence of defects in the food product; and
e) in case the presence of defects in the food product is determined, removing at least a portion of the outer layer of the food product to remove the defects.

According to the invention, there is further provided a measurement device configured to measure at least one parameter of a food product other than shape or outer contour, comprising:
- a radiation source to irradiate a food product with a radiation beam;
- a radiation sensor to detect radiation coming from the food product as a result of being irradiated by the radiation beam; and
- a processor to determine the at least one parameter other than shape or outer contour from an output of the radiation sensor.

In an embodiment, the radiation source is configured to continuously irradiate a food product. Alternatively, the radiation source may be configured to intermittently irradiate a food product.

In an embodiment, a plurality of radiation sources is used to irradiate the food product, possibly with radiation having different wavelengths, e.g. by using a white light source or supercontinuum source.

In an embodiment, the radiation source is configured to irradiate a food product with a polarized radiation beam.

In an embodiment, the radiation beam comprises radiation with a wavelength between 100nm to 1000nm, preferably between 300nm to 700nm, more preferably between 405nm and 655nm.

In an embodiment, the radiation sensor comprises one or more cameras sensitive to radiation with relevant wavelengths coming from the food product as a result of being irradiated by the radiation beam and sensitive to the location the radiation coming from the food product is incident on the camera. When at least two such cameras are used, a location in the food product emitting radiation with a specific wavelength distinguishable from other locations can be determined using for instance triangulation. The triangulation algorithm is in that case provided in the processor processing said two or more outputs from said two or more cameras.

In an embodiment, the processor is also able to determine the shape or outer contour of the food product from the output of the radiation sensor.

According to an embodiment, there is provided a control unit configured to receive a measurement signal from a measurement system and configured to output a control signal to a processing device based on the measurement signal, wherein the measurement signal comprises information about the shape or outer contour of a food product and at least one other parameter of the food product, and wherein the control signal comprises information allowing the processing device to remove at least a portion of an outer layer of the food product.

In an embodiment, the information in the control signal comprises a thickness of the outer layer to be removed.

### BRIEF DESCRIPTION OF THE DRAWINGS

The invention will now be described in a non-limiting way with reference to the accompanying drawings in which like parts are indicated by like reference symbols and in which:
- Fig. 1: schematically depicts a system to remove at least a portion of an outer layer of a food product according to an embodiment of the invention;
- Fig. 2: schematically depicts a system to remove at least a portion of an outer layer of a food product according to another embodiment of the invention;
- Fig. 3: schematically depicts a system to remove at least a portion of an outer layer of a food product according to a further embodiment of the invention; and
- Fig. 4: schematically depicts a measurement system according to an embodiment of the invention.

### DETAILED DESCRIPTION OF THE INVENTION

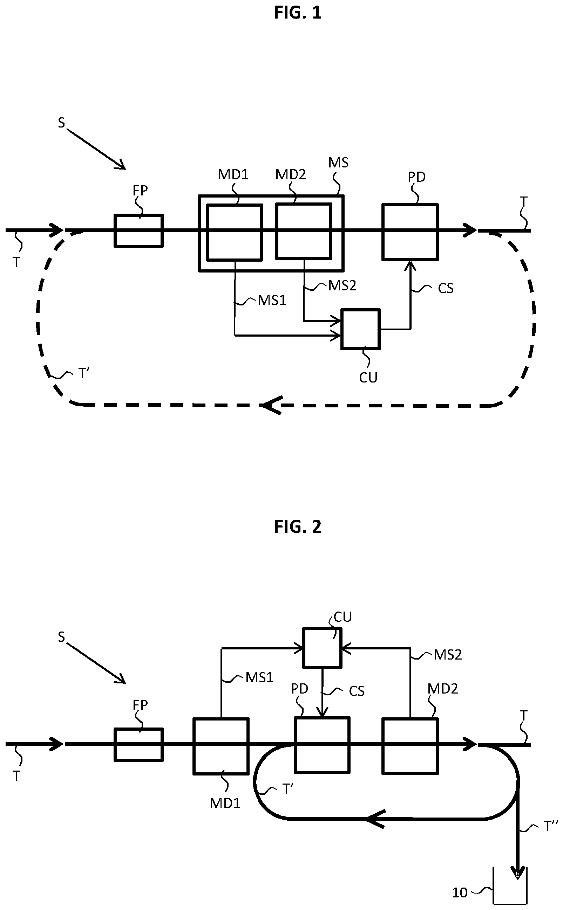

Fig. 1 schematically depicts a system S to remove at least a portion of an outer layer of a food product FP according to an embodiment of the invention. In this embodiment, the food product FP is transported along a trajectory T, for instance using a conveyor. The conveyor may for instance be a belt conveyor, in which the food product is transported on an endless belt, a bucket conveyor, in which the food product is transported in a bucket, an electric track vehicle system, in which the food product is transported by an independently driven vehicle, a roller conveyor, in which the food product is transported on rollers, or a flexible conveyor, in which the food product is transported on a plastic multi-flexing chain. Such conveyors are well-known to the skilled person in the art of conveying food products and will not be discussed here in more detail as the conveyor type is not essential to the invention.

The system S comprises a processing device PD and a measurement system MS arranged along the trajectory T, so that when the food product FP passes the measurement system MS, parameters of the food product FP can be measured and when the food product FP passes the processing device PD at least a portion of the outer layer of the food product FP can be removed.

The measurement system MS in this embodiment comprises a first measurement device MD1 configured to measure a shape or outer contour of the food product FP. Measuring the shape or outer contour of the food product FP may for instance be done using rollers to scan the outer contour of the cheese as disclosed in NL2007374. It is also envisaged that other measurement devices are used, e.g. vision systems, in which the outer contour or shape of the food product FP is determined from a camera image. Other optical solutions, such as scanning the food product with a laser beam and detecting the position of reflection of the laser beam, are also envisaged.

The measurement system MS in this embodiment further comprises a second measurement device MD2 configured to measure at least one parameter of the food product other than shape or outer contour of the food product FP. The measured at least one other parameter of the food product is used in combination with the measured shape or outer contour of the food product to remove at least a portion of the outer layer of the food product with the processing device PD.

To this end, the first measurement device MD1 and the second measurement device MD2 output a first measurement signal MS1 and a second measurement signal MS2, respectively. The first and second measurement signals MS1, MS2 are provided to a control unit CU which is configured to output a control signal CS based on the first and second measurement signals MS1, MS2, wherein the control signal CS comprises information allowing the processing device PD - to which the control signal CS is provided - to remove at least a portion of an outer layer of the food product FP.

In an embodiment, the control unit CU is or comprises a computer with a computer-readable data carrier having stored thereon a computer program product comprising instructions which, when executed by the computer, cause the computer to carry out a method for determining information allowing to remove at least a portion of an outer layer of the food product FP, comprising the following steps:
a) receiving information about at least one parameter of the food product other then shape or outer contour; and
b) determining a thickness of an outer layer of the food product to be removed based on the received information.

It is specifically noted here that this embodiment is especially suitable for the at least partial integration of the first and second measurement devices MD1 and MD2. Hence, it is possible that the measurement system comprises a single measurement device capable of measuring all required parameters including the shape or outer contour of the food product and at least one other parameter.

In an embodiment, it is possible to return the food product FP to upstream of the measurement system MS after being processed in the processing device PD via trajectory portion T' indicated in dashed lines. This allows to measure the food product FP again and to check the quality of the removal process carried out in the processing device PD or to check for other anomalies, e.g. diseases, which become visible after removing at least a portion of the outer layer of the food product. In case it is determined that the quality of the removal process is below a predetermined value, standard or threshold based on the second measurement of the food product, so that additional processing is required to increase the quality, the food product is able to pass the processing device PD for further processing based on the second measurement. In case no additional processing is required, the food product may pass the processing device the second time without being processed. It is possible to loop the food product as many times as necessary, but the control system may be configured to only allow a maximum number of processing steps and/or measurements.

The at least one other parameter of the food product may comprise (but not according to the invention) the kind of food product when the system is used for different kinds of food products. For instance, the same system may be suitable to process different kinds of fruits, e.g. melons, oranges, and/or lemons or the like. The system is then able to distinguish one kind of food product,

in this case fruit, from another kind. Knowing the kind of food product may for instance allow the control unit to set a thickness of the outer layer to be removed, a relative velocity between tool and food product in the processing device, an orientation of the tool relative to the food product, or any combination of these parameters and send this information to the processing device.

The at least one other parameter of the food product may comprise the type, variety, species or family member in a kind of food product. For instance, when the system is configured to process all kinds of cheeses, the measurement system may be used to distinguish between different types of cheeses.

Distinguishing kinds, types, varieties, species or family members may be carried out by measuring properties of the food product itself, but the measurement system may also be simply adapted (but not according to the invention) to read a code on the food product or to receive a code from the food product. This includes reading a bar code or two-dimensional code, e.g. a QR code, from the food product, but also receiving a code from a tag such as an RFID tag. In an embodiment, the different types of cheese may be distinguished by irradiating the food product with a radiation beam and detecting radiation coming from the food product as a result of being irradiated by the radiation beam, where each type of cheese may emit radiation with a distinct wavelength allowing them to determine the type of cheese and controlling the processing device accordingly.

Fig. 2 schematically depicts a system S to remove at least a portion of an outer layer of a food product FP according to another embodiment of the invention. Similar to the embodiment of Fig. 1, the system S operates on a food product FP transported along a trajectory T, for instance using a conveyor, and the system S comprises a processing device PD and a measurement system arranged along the trajectory T.

In this embodiment, the measurement system comprises a first measurement device MD1, and a second measurement device MD2. A difference between the embodiment of Fig. 1 and the embodiment of Fig. 2 is that in Fig. 1 both the first and second measurement devices MD1, MD2 are arranged upstream of the processing device PD, where in Fig. 2 the first measurement device MD1 is arranged upstream of the processing device PD and the second measurement device MD2 is arranged downstream of the processing device PD.

Depending on the measuring capabilities and configurations of the first and second measurement devices MD1, MD2, the following situations are possible:
A) the first measurement device MD1 is configured to measure a shape or outer contour of the food product FP, and the second measurement device MD2 is configured to measure at least one parameter other than shape or outer contour, so that the processing device PD initially only removes at least a portion of the outer layer of the food product FP based on a default setting and the by the first measurement device MD1 measured shape or outer contour of the food product FP, after which the second measurement device MD2 measures the at least one other parameter of the shape or outer contour, which at least one other parameter is an indication of the quality of the removal process carried out by the processing device. In case the quality is below a predetermined value or threshold, the quality can be improved by returning the food product FP to the processing device PD, indicated by trajectory portion T', for performing a further processing step, which further processing step is based on the measured shape or outer contour of the food product FP and the measured at least one other parameter.
B) The first measurement device MD1 is configured to measure both the shape or outer contour of the food product FP and at least one parameter other than shape or outer contour of the food product FP. The processing device subsequently removes at least a portion of the outer layer of the food product based on the measured shape or outer contour and the measured at least one other parameter. The second measurement device MD2 is configured to measure a parameter indicative of the quality of the removal process carried out by the processing device. In case the quality is below a predetermined value or threshold, the quality can be improved by returning the food product FP to the processing device PD, indicated by trajectory portion T', for performing a further processing step.

The embodiment of Fig. 2 thus allows to carry out the removal step multiple times until the quality is sufficient, i.e. above a predetermined value or threshold. However, the system S may be configured to limit the number of removal steps to a predetermined maximum value to prevent a nearly endless repetition of the removal steps. In case the quality is still not sufficient after carrying out the predetermined maximum number of times, the food product may be discharged from the trajectory T as indicated by trajectory portion T" to a manual inspection station or trash bin 10.

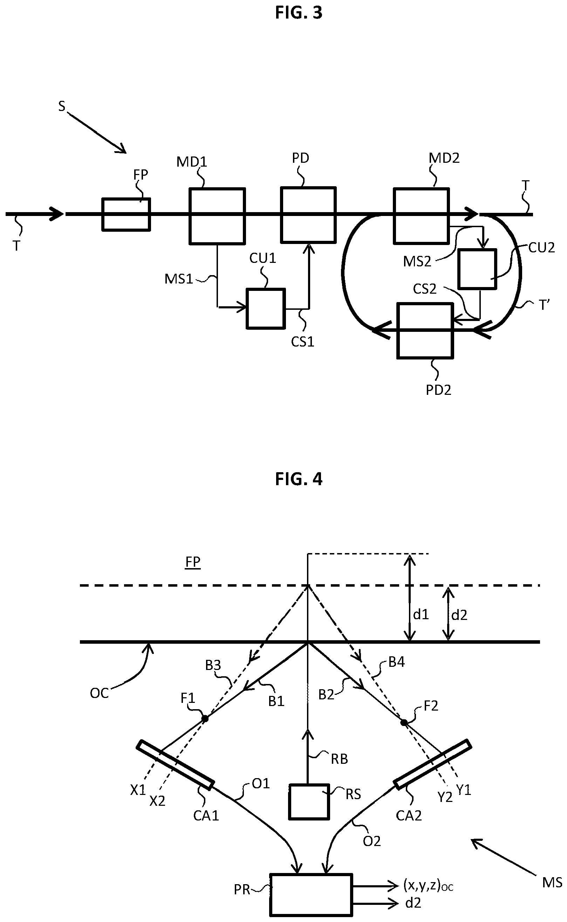

Fig. 3 schematically depicts a system S to remove at least a portion of an outer layer of a food product FP according to a further embodiment of the invention. The system S is similar to the embodiment of Fig. 2, but the main difference is that after passing the second measurement device MD2 and the determination that the quality is not sufficient, the food product FP is transported along trajectory portion T' to pass a second processing device PD2 which is similar to the processing device PD. After passing the second processing device PD2, the food product is transported along the second measurement device MD2 again to allow a further quality measurement.

The configuration of the embodiment of Fig. 3 allows an embodiment in which a first control unit CU1 is provided to control the first processing device PD, e.g. using a first control signal CS1, based on an output, e.g. measurement signal MS1 from the first measurement device MD1, and in which a second control unit CU2 is provided to control the second processing device PD2, e.g. using a second control signal CS2, based on an output, e.g. measurement signal MS2 from the second measurement device MD2 provided that the output from the second measurement device MD2 comprises information about the shape or outer contour of a food product FP and at least one parameter of the food product FP other than shape or outer contour of the food product.

Alternatively, the second control unit CU2 may control the second processing device PD2 based on an output from the first measurement device MD1 and an output from the second measurement device MD2.

Fig. 4 schematically depicts a measurement system MS according to the invention, which measurement system is suitable to measure both the shape or outer contour OC of a food product FP and a parameter other than the shape or outer contour, in this case a depth d2 indicating a thickness of an outer layer of the food product FP.

The measurement system MS comprises a radiation source, e.g. a light source, to irradiate the food product FP with a radiation beam RB. The radiation beam RB may be a single wavelength radiation beam, e.g. a laser, but may also be a swept-wavelength or multi-wavelength radiation beam outputting radiation at different wavelengths, e.g. a white light source or a supercontinuum source. In a preferred embodiment, the radiation source outputs a radiation beam RB comprising radiation with a wavelength in between 400 and 700 nm, preferably between 405 and 655 nm.

The measurement system MS further comprises a first and second camera CA1 and CA2, each camera being configured to capture an image of the region of the food product FP where the radiation beam RB is incident to the food product FP.

When the radiation beam RB hits the outer surface, i.e. the outer contour OC, a portion of the radiation beam RB is reflected of the surface and travels towards the first camera CA1 as indicated by beam B1 and a portion of the radiation beam RB is reflected of the surface and travels towards the second camera CA2 as indicated by beam B2.

The first camera CA1 has a focal point F1, so that the reflection of the radiation beam RB at the outer contour OC of the food product FP is imaged at location X1 on the first camera CA1. The second camera CA2 has a focal point F2, so that the reflection of the radiation beam RB at the outer contour OC of the food product FP is imaged at location Y1 on the second camera CA2.

The locations X1 and Y1 on the first and second camera CA1, CA2 can be used to determine a 3D location of the outer contour OC using triangulation thereby obtaining local information about the outer contour OC of the food product FP. Scanning the radiation beam RB over the outer surface of the food product FP then allows to obtain information about at least a portion of the outer contour OC of the food product FP and thus the shape of the food product FP.

The non-reflected portion of the radiation beam RB penetrates the food product FP beyond the outer contour OC. Depending on the properties of the food product FP and the radiation beam RB, the radiation beam RB will penetrate the food product up to a depth d1 and is mainly absorbed by the material. Absorption may result in an excited state of the atoms and molecules building up the material of the food product FP, which atoms and molecules will return to a lower energy level upon emitting radiation of a specific wavelength. The emitted radiation is dependent on the material the food product is made of. In case material properties of the outer layer are different from the material properties beyond the outer layer the emitted radiation may also be different. When the emitted radiation at a depth d2 can be distinguished from other radiation due to having a different wavelength, the image of the emitted radiation at depth d2 at the first and second cameras CA1, CA2 can be distinguished from e.g. the image of the radiation beam RB reflected at the outer contour OC of the food product FP.

Emitted radiation at depth d2 traveling towards the first camera CA1 is indicated by beam B3 and forms an image at location X2, and emitted radiation at depth d2 traveling towards the second camera CA2 is indicated by beam B4 and forms an image at location Y2. The 3D location of the transition from outer layer of the food product FP to inner material of the food product FP at depth d2 can be obtained from the images X2, Y2 using triangulation thereby obtaining a value representative for depth d2 as additional parameter.

The abovementioned triangulation processes are carried out by a processor PR. Output

O1 from the first camera CA1 and output 02 from the second camera CA2 are provided to the processor PR which in turn determines the 3D position (x,y,z)OC of the outer contour OC and the corresponding depth d2 indicating the thickness of the outer layer of the food product FP.

The at least one other parameter of the food product may thus comprise a thickness d2 of the outer layer or rind of the food product.

The transition from rind to inner side of the food product FP may be clear, e.g. in case of fruits (not according to the invention) where there is a substantially sudden change in properties at depth d2, or when the food product comprises an outer layer that can relatively easily be separated from the layers beneath it, but properties may also gradually change from the outside to the inside, as may for instance be the case with some type of cheeses. In case of the latter, it may be necessary to define the rind in more detail to be able to determine a thickness d2 of the rind. This may be done in a calibration method, in which the rind is analyzed in more detail to be able to determine a threshold allowing to distinguish the rind from the inner side of the food product. When measuring a food product, the system is then configured to search for the threshold in the measurement data to be able to determine a thickness of the rind. It will be apparent for the skilled person that determining the threshold to be used may be a matter of choice, where the choice may depend on other parameters, including experience and (marketing) research, e.g. in which the average consumer is asked about their opinion of the quality of the food product after removal of at least a portion of the outer layer of the food product.

Hence, applied to the embodiment of Fig. 4, material properties corresponding to a desired transition at depth d2 between rind and inner material of the food product need to be determined first. Subsequently, the optical properties of the desired transition, e.g. wavelength of emitted radiation, can be determined using a calibration process, so that based on the calibration process, the processor is able to determine the location of the transition from the camera images.

It is noted here that in case the desired transition between rind and inner material is not suitable to be detected, another location of the rind or inner material that is detectable may be used. Hence, the location of depth d2 with corresponding material properties may be measured, but the control unit may then instruct or control the processing device to remove a thickness d2+x, with x being a predetermined value (positive or negative).

Although not specifically mentioned in the above description of the different embodiments, when a product is processed multiple times, e.g. when quality is not sufficient and an additional processing step is required, the orientation of the product is altered between processing steps in order to optimize the process of product removal (e.g. removal of product at very local regions having insufficient quality or excessive rind thickness). This also includes a change of position or orientation to allow a better measurement of the product, e.g. before or after a subsequent processing step.

## Claims

1. A system (S) to remove at least a portion of an outer layer of a food product (FP), comprising:
- a processing device (PD) to remove at least a portion of the outer layer of the food product;
- a measurement system (MS) configured to measure a shape or outer contour of the food product,
wherein the food product is a cheese,
wherein the measurement system is also configured to measure at least one parameter of the food product other than shape or outer contour of the food product,
wherein the system is configured to remove at least a portion of the outer layer of the food product with the processing device based on the measured shape or outer contour of the food product and based on the at least one other parameter of the food product,
wherein the measurement system (MS) comprises a first measurement device (MD1) to measure the shape or outer contour of the food product, and a second measurement device (MD2) to measure the at least one other parameter of the food product,
**characterized in that**
the second measurement device comprises:
- a radiation source (RS) to irradiate the food product with a radiation beam (RB);
- a radiation sensor (CA1, CA2) to detect radiation coming from the food product as a result of being irradiated by the radiation beam; and
- a processor (PR) to determine the at least one parameter other than shape or outer contour (OC) from an output of the radiation sensor.

2. A system according to claim 1, wherein the at least one other parameter of the food product comprises a type of cheese.

3. A system according to claim 1 or 2, wherein the at least one other parameter of the food product comprises a thickness of the outer layer of the food product.

4. A system according to any of claims 1-3, wherein the first measurement device is arranged upstream of the processing device and the second measurement device is arranged downstream of the processing device.

5. A system according to any of claims 1-3, wherein the first and second measurement devices are integrated and arranged upstream of the processing device.

6. A system according to any of the claims 1-5, further comprising a conveyor to transport the food products along the processing device and the measurement system.

7. A system according to any of the claims 1-6, further comprising a control unit configured to receive a measurement signal from the measurement system and configured to output a control signal to the processing device based on the measurement signal, wherein the measurement signal comprises information about the shape or outer contour of a food product and the at least one parameter of the food product other than shape or outer contour of the food product, and wherein the control signal comprises information allowing the processing device to remove at least a portion of an outer layer of the food product.

8. A system according to claim 7, wherein the information allowing the processing device to remove at least a portion of an outer layer of the food product comprises a thickness of the outer layer to be removed.

9. A system according to any of claims 1-8, wherein the radiation beam comprises radiation with a wavelength between 100nm to 1000nm, preferably between 300nm to 700nm, more preferably between 405nm and 655nm.

10. A system according to any of claims 1-9, wherein the radiation sensor comprises one or more cameras sensitive to radiation with relevant wavelengths coming from the food product as a result of being irradiated by the radiation beam and sensitive to the location the radiation coming from the food product is incident on the camera.

11. A method to remove at least a portion of an outer layer of a food product, wherein the food product is a cheese, said method comprising the following steps:
a) measuring a shape or outer contour of the food product;
b) measuring at least one parameter of the food product other than shape or outer contour of the food product; and
c) removing at least a portion of the outer layer of the food product based on the measured shape or outer contour of the food product and based on the at least one other parameter of the food product,
**characterized in that** measuring at least one parameter of the food product other than shape or outer contour of the food product includes irradiating the food product with a radiation beam (RB), detecting radiation coming from the food product as a result of being irradiated by the radiation beam, and
determining the at least one parameter other than shape or outer contour from the detected radiation.

12. A method according to claim 11, wherein measuring at least one parameter of the food product other than shape or outer contour of the food product in step b) is carried out to determine a thickness of the outer layer to be removed, wherein removing at least a portion of the outer layer of the food product in step c) is based on the measured shape or outer contour of the food product and based on the determined thickness.

13. A method according to claim 11 or 12, wherein the method further comprises the following steps:
d) measuring at least one parameter other than shape or outer contour of the food product to determine the presence of defects in the food product; and
e) in case the presence of defects in the food product is determined, removing at least a portion of the outer layer of the food product to remove the defects.

14. A method according to any of claims 11-13, wherein at least two cameras are used to determine a location in the food product emitting radiation with a specific wavelength distinguishable from other locations, for instance using triangulation.

## Patentansprüche

1. System (S) zum Entfernen mindestens eines Teils einer äußeren Schicht eines Lebensmittelprodukts (FP), umfassend:
- eine Verarbeitungsvorrichtung (PD) zum Entfernen mindestens eines Teils der äußeren Schicht des Lebensmittelprodukts;
- ein Messsystem (MS), das konfiguriert ist, um eine Form oder Außenkontur des Lebensmittelprodukts zu messen,
wobei das Lebensmittelprodukt ein Käse ist,
wobei das Messsystem auch dazu konfiguriert ist, mindestens einen anderen Parameter des Lebensmittelprodukts als die Form oder Außenkontur des Lebensmittelprodukts zu messen,
wobei das System dazu konfiguriert ist, mindestens einen Teil der äußeren Schicht des Lebensmittelprodukts mit der Verarbeitungsvorrichtung basierend auf der gemessenen Form oder Außenkontur des Lebensmittelprodukts und basierend auf dem mindestens einen anderen Parameter des Lebensmittelprodukts zu entfernen,
wobei das Messsystem (MS) eine erste Messvorrichtung (MD1) zum Messen der Form oder Außenkontur des Lebensmittelprodukts und eine zweite Messvorrichtung (MD2) zum Messen des mindestens einen anderen Parameters des Lebensmittelprodukts umfasst,
**dadurch gekennzeichnet, dass**
das zweite Messgerät umfasst:
- eine Strahlungsquelle (RS) zum Bestrahlen des Lebensmittelprodukts mit einem Strahlenbündel (RB);
- einen Strahlungssensor (CA1, CA2) zum Erfassen von Strahlung, die von dem Lebensmittelprodukt als Ergebnis der Bestrahlung durch den Strahlungsstrahl ausgeht; und
- einen Prozessor (PR) zum Bestimmen des mindestens einen anderen Parameters als Form oder Außenkontur (OC) aus einer Ausgabe des Strahlungssensors.

2. System nach Anspruch 1, wobei der mindestens eine andere Parameter des Lebensmittelprodukts eine Käsesorte umfasst.

3. System nach Anspruch 1 oder 2, wobei der mindestens eine andere Parameter des Lebensmittelprodukts eine Dicke der äußeren Schicht des Lebensmittelprodukts umfasst.

4. System nach einem der Ansprüche 1 bis 3, wobei die erste Messvorrichtung stromaufwärts der Verarbeitungsvorrichtung angeordnet ist und die zweite Messvorrichtung stromabwärts der Verarbeitungsvorrichtung angeordnet ist.

5. System nach einem der Ansprüche 1 bis 3, wobei die erste und die zweite Messvorrichtung integriert und stromaufwärts der Verarbeitungsvorrichtung angeordnet sind.

6. System nach einem der Ansprüche 1 bis 5, ferner umfassend einen Förderer, um die Lebensmittelprodukte entlang der Verarbeitungsvorrichtung und des Messsystems zu transportieren.

7. System nach einem der Ansprüche 1-6, ferner umfassend eine Steuereinheit, die konfiguriert ist, um ein Messsignal von dem Messsystem zu empfangen, und konfiguriert, um ein Steuersignal an die Verarbeitungsvorrichtung basierend auf dem Messsignal auszugeben, wobei das Messsignal Informationen über die Form oder Außenkontur eines Lebensmittelprodukts und den mindestens einen anderen Parameter des Lebensmittelprodukts als die Form oder Außenkontur des Lebensmittelprodukts umfasst, und wobei das Steuersignal Informationen umfasst, die es der Verarbeitungsvorrichtung ermöglichen, mindestens eine Portion zu entfernen einer äußeren Schicht des Lebensmittelprodukts.

8. System nach Anspruch 7, wobei die Information, die es der Verarbeitungsvorrichtung ermöglicht, mindestens einen Teil einer äußeren Schicht des Lebensmittelprodukts zu entfernen, eine Dicke der zu entfernenden äußeren Schicht umfasst.

9. System nach einem der Ansprüche 1 bis 8, wobei das Strahlungsbündel Strahlung mit einer Wellenlänge zwischen 100 nm bis 1000 nm, vorzugsweise zwischen 300 nm bis 700 nm, stärker bevorzugt zwischen 405 nm und 655 nm umfasst.

10. System nach einem der Ansprüche 1 bis 9, wobei der Strahlungssensor eine oder mehrere Kameras umfasst, die für Strahlung mit relevanten Wellenlängen empfindlich sind, die von dem Lebensmittelprodukt als Ergebnis der Bestrahlung durch den Strahlungsstrahl kommen, und die für den Ort der Strahlung empfindlich sind das vom Lebensmittel kommende Produkt fällt auf die Kamera.

11. Verfahren zum Entfernen mindestens eines Teils einer äußeren Schicht eines Lebensmittelprodukts, wobei das Lebensmittelprodukt ein Käse ist, wobei das Verfahren die folgenden Schritte umfasst:
a) Messen einer Form oder Außenkontur des Lebensmittelprodukts;
b) Messen mindestens eines anderen Parameters des Lebensmittelprodukts als der Form oder der Außenkontur des Lebensmittelprodukts; und
c) Entfernen mindestens eines Teils der äußeren Schicht des Lebensmittelprodukts basierend auf der gemessenen Form oder Außenkontur des Lebensmittelprodukts und basierend auf dem mindestens einen anderen Parameter des Lebensmittelprodukts,
**dadurch gekennzeichnet, dass** das Messen mindestens eines anderen Parameters des Lebensmittelprodukts als der Form oder der Außenkontur des Lebensmittelprodukts das Bestrahlen des Lebensmittelprodukts mit einem Strahlungsstrahl (RB) umfasst, das Detektieren von Strahlung, die von dem Lebensmittelprodukt als Ergebnis der Bestrahlung mit dem Strahlenbündel ausgeht, und Bestimmen des mindestens einen anderen Parameters als Form oder Außenkontur aus der erfassten Strahlung.

12. Verfahren nach Anspruch 11, wobei das Messen mindestens eines anderen Parameters des Lebensmittelprodukts als Form oder Außenkontur des Lebensmittelprodukts in Schritt b) durchgeführt wird, um eine Dicke der zu entfernenden Außenschicht zu bestimmen, wobei Entfernen zumindest ein Teil der Außenschicht des Lebensmittelprodukts in Schritt c) basiert ist auf der gemessenen Form oder Außenkontur des Lebensmittelprodukts und basiert ist auf der bestimmten Dicke.

13. Verfahren nach Anspruch 11 oder 12, wobei das Verfahren ferner die folgenden Schritte umfasst:
d) Messen mindestens eines anderen Parameters als Form oder Außenkontur des Lebensmittelprodukts, um das Vorhandensein von Fehlern in dem Lebensmittelprodukt zu bestimmen; und
e) falls das Vorhandensein von Fehlern in dem Lebensmittelprodukt festgestellt wird, Entfernen mindestens eines Teils der äußeren Schicht des Lebensmittelprodukts, um die Fehler zu beseitigen.

14. Verfahren nach einem der Ansprüche 11-13, wobei mindestens zwei Kameras verwendet werden, um einen Ort in dem Lebensmittelprodukt zu bestimmen, der Strahlung mit einer bestimmten Wellenlänge emittiert, die von anderen Orten unterscheidbar ist, beispielsweise unter Verwendung von Triangulation.

## Revendications

1. Un système (S) pour enlever au moins une partie d'une couche externe d'un produit alimentaire (FP), comprenant :
- un dispositif de traitement (PD) pour enlever au moins une partie de la couche externe du produit alimentaire ;
- un système de mesure (MS) configuré pour mesurer une forme ou un contour extérieur du produit alimentaire,
dans lequel le produit alimentaire est un fromage,
dans lequel le système de mesure est également configuré pour mesurer au moins un paramètre du produit alimentaire autre que la forme ou le contour extérieur du produit alimentaire,
dans lequel le système est configuré pour enlever au moins une partie de la couche externe du produit alimentaire avec le dispositif de traitement sur la base de la forme mesurée ou du contour externe du produit alimentaire et sur la base d'au moins un autre paramètre du produit alimentaire,
dans lequel le système de mesure (MS) comprend un premier dispositif de mesure (MD1) pour mesurer la forme ou le contour extérieur du produit alimentaire, et un deuxième dispositif de mesure (MD2) pour mesurer l'au moins un autre paramètre du produit alimentaire,
**caractérisé en ce que** le deuxième dispositif de mesure comprend :
- une source de rayonnement (RS) pour irradier le produit alimentaire avec un faisceau de rayonnement (RB) ;
- un capteur de rayonnement (CA1, CA2) pour détecter le rayonnement provenant du produit alimentaire suite à son irradiation par le faisceau de rayonnement ; et
- un processeur (PR) pour déterminer le au moins un paramètre autre que la forme ou le contour extérieur (OC) à partir d'une sortie du capteur de rayonnement.

2. Système selon la revendication 1, dans lequel l'au moins un autre paramètre du produit alimentaire comprend un type de fromage.

3. Système selon la revendication 1 ou 2, dans lequel l'au moins un autre paramètre du produit alimentaire comprend une épaisseur de la couche externe du produit alimentaire.

4. Système selon l'une quelconque des revendications 1 à 3, dans lequel le premier dispositif de mesure est disposé en amont du dispositif de traitement et le deuxième dispositif de mesure est disposé en aval du dispositif de traitement.

5. Système selon l'une quelconque des revendications 1 à 3, dans lequel les premier et deuxième dispositifs de mesure sont intégrés et disposés en amont du dispositif de traitement.

6. Système selon l'une quelconque des revendications 1 à 5, comprenant en outre un convoyeur pour transporter les produits alimentaires le long du dispositif de traitement et du système de mesure.

7. Système selon l'une quelconque des revendications 1 à 6, comprenant en outre une unité de commande configurée pour recevoir un signal de mesure du système de mesure et configurée pour délivrer un signal de commande au dispositif de traitement sur la base du signal de mesure, dans lequel le signal de mesure comprend des informations sur la forme ou le contour extérieur d'un produit alimentaire et le au moins un paramètre du produit alimentaire autre que la forme ou le contour extérieur du produit alimentaire, et dans lequel le signal de commande comprend des informations permettant au dispositif de traitement d'en enlever au moins une partie d'une couche externe du produit alimentaire.

8. Système selon la revendication 7, dans lequel les informations permettant au dispositif de traitement d'enlever au moins une partie d'une couche externe du produit alimentaire comprennent une épaisseur de la couche externe à enlever.

9. Système selon l'une quelconque des revendications 1 à 8, dans lequel le faisceau de rayonnement comprend un rayonnement avec une longueur d'onde comprise entre 100 nm et 1000 nm, de préférence entre 300 nm et 700 nm, plus préférablement entre 405 nm et 655 nm.

10. Système selon l'une quelconque des revendications 1 à 9, dans lequel le capteur de rayonnement comprend une ou plusieurs caméras sensibles au rayonnement avec des longueurs d'onde pertinentes provenant du produit alimentaire du fait d'être irradié par le faisceau de rayonnement et sensible à l'emplacement du rayonnement provenant du produit alimentaire est incident sur la caméra.

11. Procédé pour enlever au moins une partie d'une couche externe d'un produit alimentaire, dans lequel le produit alimentaire est un fromage, ledit procédé comprenant les étapes suivantes :
a) mesurer une forme ou un contour extérieur du produit alimentaire ;
b) mesurer au moins un paramètre du produit alimentaire autre que la forme ou le contour extérieur du produit alimentaire ; et
c) enlever au moins une partie de la couche externe du produit alimentaire sur la base de la forme ou du contour externe mesuré du produit alimentaire et sur la base de l'au moins un autre paramètre du produit alimentaire,
**caractérisé en ce que** la mesure d'au moins un paramètre du produit alimentaire autre que la forme ou le contour extérieur du produit alimentaire comprend l'irradiation du produit alimentaire avec un faisceau de rayonnement (RB), la détection du rayonnement provenant du produit alimentaire suite à son irradiation par le faisceau de rayonnement, et déterminer le au moins un paramètre autre que la forme ou le contour extérieur à partir du rayonnement détecté.

12. Procédé selon la revendication 11, dans lequel la mesure d'au moins un paramètre du produit alimentaire autre que la forme ou le contour extérieur du produit alimentaire à l'étape b) est effectuée pour déterminer une épaisseur de la couche externe à enlever, dans lequel l'enlèvement au moins une partie de la couche externe du produit alimentaire à l'étape c) est basée sur la forme ou le contour extérieur mesuré du produit alimentaire et sur la base de l'épaisseur déterminée.

13. Procédé selon la revendication 11 ou 12, dans lequel le procédé comprend en outre les étapes suivantes :
d) mesurer au moins un paramètre autre que la forme ou le contour extérieur du produit alimentaire pour déterminer la présence de défauts dans le produit alimentaire ; et
e) dans le cas où la présence de défauts dans le produit alimentaire est déterminée, enlever au moins une partie de la couche externe du produit alimentaire pour enlever les défauts.

14. Procédé selon l'une quelconque des revendications 11 à 13, dans lequel au moins deux caméras sont utilisées pour déterminer un emplacement dans le produit alimentaire émettant un rayonnement avec une longueur d'onde spécifique pouvant être distinguée d'autres emplacements, par exemple en utilisant la triangulation.
